# EUROPÄISCHE PATENTSCHRIFT

(11) **EP 1 439 124 B1**
(45) Veröffentlichungstag und Bekanntmachung des Hinweises auf die Patenterteilung: **27.06.2007**
(21) Anmeldenummer: 03021312.8
(22) Anmeldetag: 19.09.2003
(51) Int. Cl.: B64G 1/64, F16L 23/04

(54) **Vorrichtung zum lösbaren Verbinden rotationssymmetrischer Bauteile**
Device for the releasable connection of rotation-symmetric parts
Dispositif pour l'accouplement détachable de composants à symétrie de révolution

(30) Priorität: 18.01.2003 DE 10301783
(43) Veröffentlichungstag der Anmeldung: 21.07.2004
(73) Patentinhaber: Astrium GmbH, 85521 Ottobrunn (DE)
(72) Erfinder: Hüssler, Walter, Dr.-Ing., 22816 Stuhr (DE)
(74) Vertreter: Hansmann, Dierk

(56) Entgegenhaltungen:
- DE-A1- 10 033 093
- US-B1- 6 454 214

## Beschreibung

Die Erfindung betrifft eine Vorrichtung zum lösbaren Verbinden rotationssymmetrischer zylindrischer oder kegeliger Bauteile in Form eines Spannbandes, das die zu verbindenden Bauteile in den Spannebenen umfaßt, auf dessen Innenseite Klammerelemente angeordnet sind, die mit flanschartig ausgebildeten Ansätzen der Bauteile zusammenwirken, und bei dem wenigstens ein Spanngurt um senkrecht zur Zugrichtung des Spannbandes angeordnete Bolzen geführt ist, wobei zwei sich gegenüberliegende Bolzen über ein Spannelement lösbar miteinander verbunden sind und wobei jedes Spannelement aus zwei im Abstand voneinander an einer Trägerplatte schwenkbar gehalterten Spannhebeln besteht, die die Bolzen tragen wobei die Vorrichtung Verriegelungselemente einschließt, über die Spannhebel in ihrer Spannposition arretierbar sind.

Eine Vorrichtung nach dem Stand der Technik ist aus der DE 100 33 093 A1 bekannt geworden und dient dem Zweck, Nutzlasten an Endstufen von Trägerraketen zu haltern und sie bei Erreichen der vorgesehenen Zielumlaufbahn durch das Öffnen des Spannelementes von diesen zu lösen. Eine weitere für diesen Verwendungszweck eingesetzte Vorrichtung, die auch als Marman-Spannbandverbindung bezeichnet wird, ist darüber hinaus in der DE-OS 26 55 772 beschrieben. Schließlich sind aus der DE 37 27 448 C2 sowie der DE 42 21 525 A1 für den gleichen Verwendungszweck eingesetzte Spannvorrichtungen bekannt geworden. Bei all diesen bekannten Vorrichtungen sind auf der Innenfläche des Spannbandes Klammerelemente vorgesehen, die wiederum auf ihrer Innenseite konische Ausnehmungen aufweisen, mit denen sie über entsprechend geformte Flansche oder Interfaceringe greifen, die an den Endbereichen der miteinander zu verbindenden Bauteile angeordnet sind.

Bei den meisten der bisher bekannt gewordenen Spannvorrichtungen werden die zur Verriegelung dienenden Halteelemente oder Schrauben innerhalb von Mikrosekunden pyrotechnisch getrennt, so daß sich die Verbindungsringe in dieser sehr kurzen zeit entspannen und die Klammerelemente von den Flanschen oder Interfaceringen heruntergezogen werden und sich die Bauteile, beispielsweise eine Nutzlast und eine Trägerendstufe, voneinander lösen. Dabei können unter Umständen sehr große nieder- bis hochfrequente Belastungen in den angrenzenden Strukturen und in weiteren Bereichen oberhalb und unterhalb der Trennsysteme auftreten. Die Anregung ist dabei auf die aus der pyrotechnischen Trennung resultierenden Schockwellen und dem Entspannvorgang bei der Energiefreisetzung aus der Bandvorspannung in den angrenzenden Bauteilen und Systemen der Rakete sowie in der Nutzlast zurückzuführen.

Zur Vermeidung solcher Beanspruchung sind bei den Vorrichtungen gemäß der DE 42 21 525 A1 und DE 100 33 093 A1 Systeme vorgeschlagen worden, die einen verlangsamten kontrollierten Öffnungsvorgang ermöglichen. Insbesondere sind bei der aus der DE 100 33 093 A1 bekannt gewordenen Anordnung alle Belastungen drastisch reduziert, weil hier nicht nur eine Anregung aufgrund einer pyrotechnischen Trennung vollständig entfällt, sondern weil zugleich der Entspannvorgang um etwa den Faktor 30 bis 50 gegenüber anderen bekannten Vorrichtungen dieser Art verlangsamt abläuft. Dennoch kann auch bei dieser bekannten Vorrichtung der Entspannvorgang in den angrenzenden Strukturen zu Anregungen im Bereich der Eigenfrequenzen oder aber im niederfrequenten Bereich führen.

Aufgabe der Erfindung ist es, eine Vorrichtung der eingangs genannten Art so auszubilden, daß eine einstellbare und optimierte Öffnungszeit möglich ist und daß dadurch mechanische Belastungen in Form von Schwingungsanregungen weitestmöglich vermieden werden.

Die Erfindung löst die Aufgabe, indem sie vorsieht, daß die Vorrichtung zusätzlich dazu Verzögerungselemente einschließt, über die die Spannhebel auf ihrem Öffnungsweg beaufschlagbar sind.

Die erfindungsgemäße Vorrichtung erlaubt eine Anpassung sowohl der Öffnungszeit als auch des Kraft-Zeit-Gradienten und damit eine Optimierung der Anregung und eine noch weitergehende Reduzierung der Belastungen. Diese Möglichkeit ist durch die Verzögerungselemente, die in der bevorzugten Ausführungsform als Blattfedern ausgebildet sind, gegeben, da diese ein Gegenmoment zum Öffnungsmoment des Spannhebels erzeugen. Über die Eigenschaften der Verzögerungselemente bzw. der Federn, z. B. ihren Querschnitt oder das Material, aus dem sie bestehen, kann der Entspannvorgang gesteuert und optimiert werden. Dies kann in weiterer Ausgestaltung der Erfindung zusätzlich auch über den Startwinkel des Gegenmomentes erfolgen, d.h. über den Zeitpunkt des ersten Kontaktes zwischen dem Spannhebel und dem Verzögerungselement und damit des Einwirkens des Verzögerungselementes bzw. der Feder auf den Spannhebel. Speziell niederfrequente Anregungen können auf diese Weise deutlich weiter vermindert werden. So verlängert ein späterer Eingriff, bewirkt durch einen größerem Abstand zwischen dem Verzögerungselement und einem am Spannhebel angeordneten Bolzen, der vom verzögerungselement beaufschlagt wird, weniger die Dauer des Öffnungsvorganges, sondern vermindert vielmehr den Kraft-zeit-Gradienten am Ende des Entspannvorgangs. Dadurch ist eine erhebliche weitere Reduzierung der Erregungsschwingung und der damit verbundenen dynamischen Antworten in den angrenzenden Strukturen möglich.

Bei der erfindungsgemäßen Vorrichtung erfolgt das Lösen des Spannbandes und damit die Trennung der miteinander verbundenen Komponenten durch ein Verschwenken der Spannhebel aus einer Schließ- in eine Öffnungsposition, wobei bei der bevorzugten Ausführungsform das Spannelement als Ganzes und damit die gesamte Anordnung in einem geschlossenem Zustand verbleibt. Die Auslösung des Öffnungsvorganges kann mit geringer Energie bzw. Kraft erfolgen und der gesamte Öffnungsvorgang läuft in einem kontrollierten zeitlichen Rahmen ab.

Weitere Ausgestaltungen der Erfindung sind durch die Merkmale der Unteransprüche gekennzeichnet.

Im folgenden soll die Erfindung anhand eines in der zeichnung dargestellten Ausführungsbeispiels näher erläutert werden. Es zeigen:
- Fig. 1: eine perspektivische Darstellung eines Spannbandes in geschlossenem Zustand,
- Fig. 2: die Anordnung gemäß Fig. 1 in Draufsicht im geöffneten Zustand,
- Fig. 3: Details der Anordnung gemäß Fig. 1 in geschnittener Darstellung,
- Fig. 4: eine perspektivische Darstellung des Verschlußbereiches der Anordnung gemäß. Fig. 1 in geschlossenem Zustand,
- Fig. 5: eine seitliche Ansicht des Verschlußbereiches der Anordnung gemäß Fig. Fig. 4 und
- Fig. 6: eine perspektivische Darstellung des gleichen verschlußbereiches in geöffnetem Zustand.

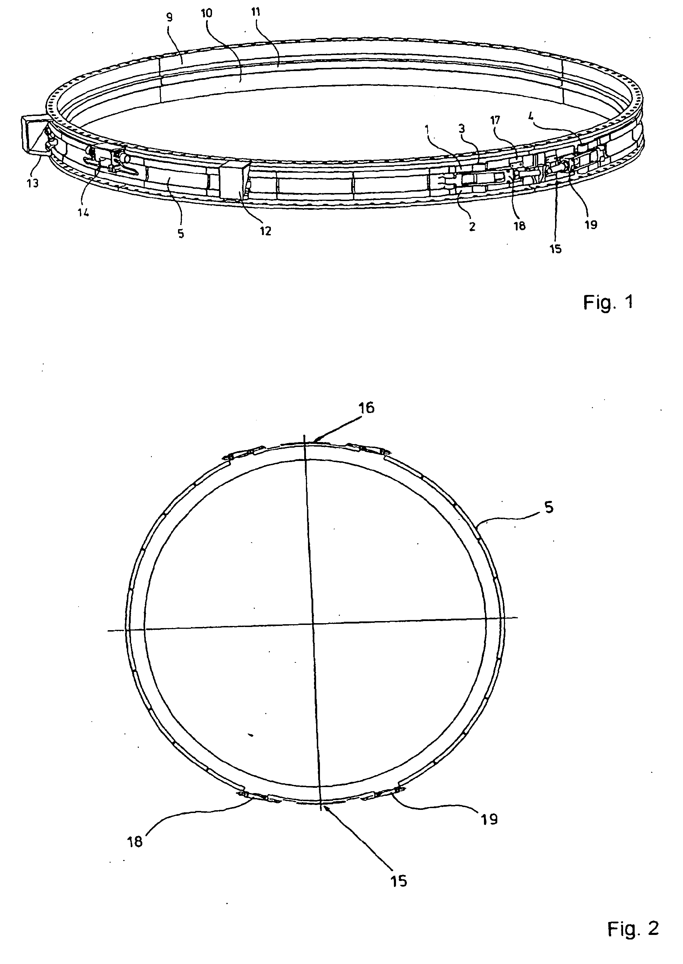

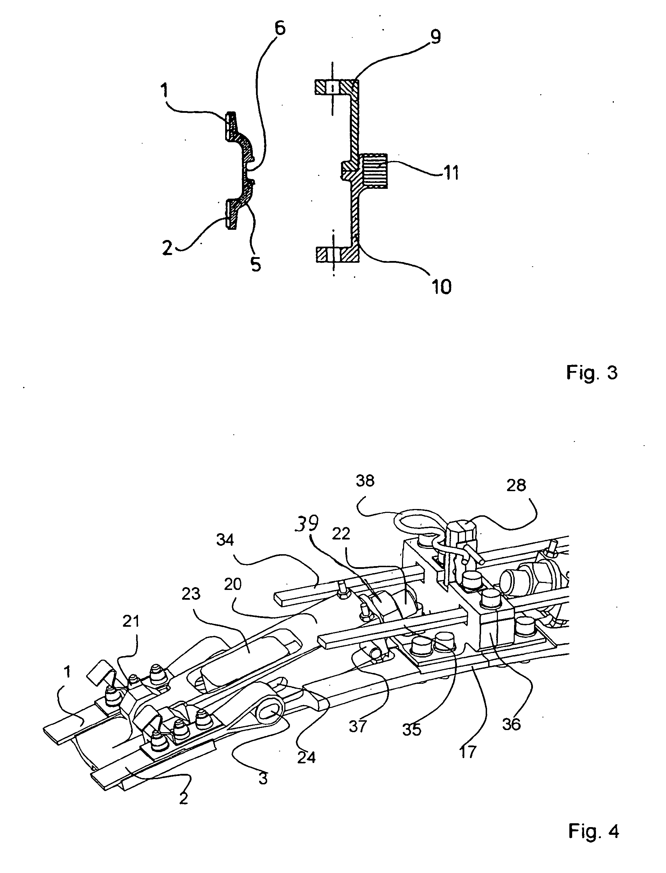

Bei der in Fig. 1 dargestellten Anordnung wird eine verbindungsvorrichtung nach Art eines Spannbandes von zwei Spanngurten 1 und 2 gebildet, die im Abstand parallel zueinander angeordnet sind. Die Spanngurte 1 und 2 sind um verbindungsbolzen 3 und 4 geschlungen, die parallel zur Längsachse zweier miteinander zu verbindender, in der Zeichnung nicht dargestellter rotationssymmetrischer, insbesondere zylindrischer oder kegelförmiger Bauteile liegen. Zwischen den beiden Spanngurten 1 und 2 ist eine Vielzahl gleichartig aufgebauter Klammerelemente 5 angeordnet, die den im linken Teil der Fig. 3 gezeigten Querschnitt aufweisen. Insbesondere sind die Klammerelemente 5 in ihrem mittlerem Bereich jeweils mit in Umfangsrichtung durchlaufenden konischen Ausnehmungen 6 versehen, die in ihrer Form auf entsprechende konisch ausgebildete Flächen 7, 8 von Anschluß- oder Interfaceringen 9, 10 abgestimmt sind, die die Verbindung zu den angrenzenden, miteinander zu verbindenden Bauteilen herstellen. Einer der Anschlußringe 9, 10 ist auf der Innenfläche ferner mit einer umlaufenden ringförmigen Verstärkung 11 versehen. Vervollständigt wird die Anordnung durch eine Reihe von Bandhaltern 12, 13 sowie durch Abzugsfedern 14.

Die Verbindungsbolzen 3 und 4 sind, gemäß den Figuren 4 bis 6 jeweils paarweise in einem Spannelement 15, 16 gehaltert. Letztere bestehen jeweils aus einer Trägerplatte 17, die in ihrer Form dem Radius der miteinander zu verbindenden Anschlußringe 9, 10 angepaßt ist und auf der zwei Spannhebel 18 und 19 schwenkbar gelagert sind.

Die Spannhebel 18 und 19 sind, wie insbesondere aus den Detaildarstellungen der Figuren 4 bis 6 hervorgeht, jeweils über die Bolzen 3 bzw. 4 mit den Spanngurten 1 und 2 verbunden und als sogenannte Schnellspannhebel ausgebildet. Der eigentliche Spannhebel wird dabei jeweils von einem angenähert rechteckigen Rahmen 20 gebildet, dessen eines Ende um eine von einem Schwenkbolzen 21 gebildete, parallel zu den Bolzen 3 und 4 verlaufende Achse schwenkbar gehaltert ist. Der andere Endbereich des Rahmens 20 trägt in einer Bohrung eine Spannschraube 22, die sich in das Innere des Rahmens 20 erstreckt und dort mit einem Ansatz 23 versehen ist. Dieser Ansatz 23 wiederum ist als Halterung für den Bolzen 3 ausgebildet, der durch Langlochbohrungen 24 des Rahmens 20 hindurch zu beiden Seiten aus dem Rahmen 20 hinausragt und in diesen Bereichen die beiden Spanngurte 1 und 2 trägt. Durch das Drehen der Spannmutter 39 auf der Spannschraube 22 verschiebt diese sich im Rahmen 20 mit dem Ansatz 23 und mit den Bolzen 3, womit dann in den Spanngurten 1 und 2 eine hohe Vorspannung erzeugt wird.

An dem die Spannschraube 22 tragenden Endbereich jedes der Rahmen 20 ist ferner jeweils ein Haltebügel 25 angebracht, der mit einem Riegel 26 zusammenwirkt, der im Abstand zum Schwenkbolzen 21 in einer Aufnahme 36 an der Trägerplatte 17 in Längsrichtung des Spannbandes verschieblich gehaltert ist. Der Riegel 26 ragt mit seinen beiden Endbereichen aus der Aufnahme 36 hinaus, wobei ein Endbereich in der Schließposition der Anordnung unter den Haltebügel 25 greift, während der dem Spannhebel 18 abgewandte Endbereich mit einem Öffnungsriegel 28 zusammenwirkt, über den der Öffnungsvorgang eingeleitet wird und der durch eine Abzugsfeder 38 gesichert ist.

Schließlich sind in der Aufnahme 36 oberhalb der Trägerplatte 17 zwei Blattfedern 34 und 35 gehaltert, deren beiden Enden jeweils aus der Aufnahme 36 herausragen und die in einem Abstand b oberhalb von Bolzen 37 liegen. Letztere sind jeweils derart an den beiden Seitenflächen der Rahmen 20 angeordnet, daß sie seitlich aus diesen herausragen.

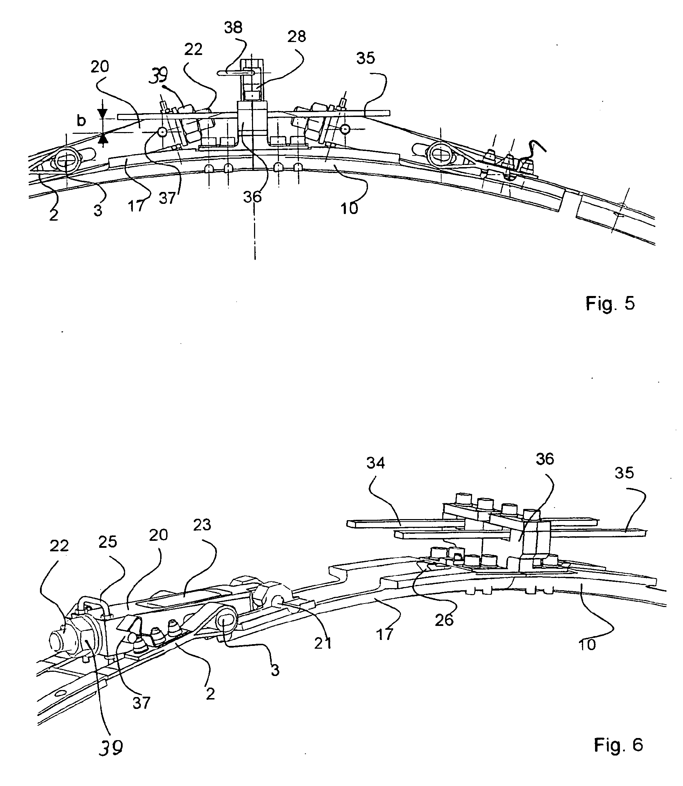

Bei der Montage der Anordnung ermöglichen die Spannhebel 18 und 19 durch einfaches Umlegen einen raschen Übergang von der in Fig. 6 dargestellten geöffneten zu der in den Figuren 4 und 5 gezeigten geschlossenen Stellung und damit das Aufbringen einer Vorspannung auf die Spanngurte 1 und 2. Die radiale Verschiebung der Klammerelemente 5 wird dabei durch die beiden Spannhebel 18 und 19 bewirkt, wodurch der für das vollständige Spannen der Anordnung noch erforderliche Spannschraubweg wesentlich verkürzt wird. Die endgültige Vorspannung der Spanngurte 1 und 2 wird schließlich durch Verdrehen der auf den Gewinden der Spannschrauben 22 befindlichen Muttern 39 eingestellt.

Nach erfolgtem Umlegen werden die Spannhebel 18 und 19 durch die Haltebügel 25 sowie die Riegel 26 in der Schließposition gehalten. Bei Erreichen der vorgegebenen Position geschieht durch die Riegel 26 die Freigabe der Anordnung. Bei der hier beschriebenen Anordnung erfolgt dies durch ein elektromagnetisches System, das auf den Öffnungsriegel 28 einwirkt und das eine kontrollierte Öffnung des Systems bewirkt und für eine verzögerte Freigabe der in ihm gespeicherten Energie sorgt. Zugleich unterstützen die im gesamten System vorhandene Reibung durch die Massenträgheitskräfte des Spann- und Verriegelungssystems und des Klammer-Bandsystems den kontrolliert ablaufenden Öffnungsvorgang. Die elastischen Verzögerungselemente in Gestalt der beiden Blattfedern 34, 35 gelangen, nachdem die Spannhebel 18 und 19 auf ihrem Öffnungsweg den Abstand b überwunden haben, in Eingriff mit den Bolzen 37. Indem diese Bolzen nunmehr an den Oberflächen der Blattfedern 34, 35 entlanggleiten und dabei die Blattfedern elastisch verformen, erzeugen sie ein Gegenmoment zum Öffnungsmoment der Spannhebel 18 und 19 und es kommt zu einer kontrollierten Verlangsamung des Öffnungsvorganges. Durch die Auswahl von Werkstoffen mit geeignetem Elastizitätsmodul sowie durch die Wahl eines optimierten Abstandes b ergeben sich dabei nahezu beliebige Möglichkeiten zur Anpassung der Öffnungszeit und des Kraft-Zeit-Gradienten und damit eine Optimierung der Erregung sowie eine generelle weitere Reduzierung der Belastungen.

Ferner kann durch die Wahl entsprechend langer Spanngurte bzw. Spannseile und durch die Anordnung der erforderlichen Anzahl von Klammerelementen die vorstehend beschriebene Spannbandvorrichtung für praktisch alle Durchmesser an Interfaceringen bzw. Flanschen eingesetzt werden. Darunter auch für solche mit sehr großen Durchmessern, bei denen bisher ein Einsatz derartiger Spannbandverbindungen als nicht möglich angesehen wurde und statt dessen aufwendigere und vor allem schwerere Verbindungsvorrichtungen eingesetzt wurden. Bei der Auslegung der erforderlichen Festigkeiten braucht bei Verwendung der vorstehend beschriebenen Anordnung das Auftreten von etwaigen Biegemomenten an den Interfaceringen nicht berücksichtigt zu werden. Vielmehr bilden die von den Spannbändern umschlossenen Interfaceringe ein System hoher Tragfähigkeit, wobei letztere im wesentlichen nur durch die Festigkeit der Interfaceringe oder Flansche begrenzt wird.

Anzumerken ist schließlich, daß es im Rahmen der Erfindung möglich ist, sowohl auf den gesamten Umfang lediglich eine Spannvorrichtung anzuordnen als auch mehrere derartige Vorrichtungen über den Umfang verteilt vorzusehen.

## Patentansprüche

1. Vorrichtung zum lösbaren Verbinden rotationssymmetrischer zylindrischer oder kegeliger Bauteile in Form eines Spannbandes, das die zu verbindenden Bauteile in den Spannebenen umfaßt, auf dessen Innenseite Klammerelemente (5) angeordnet sind, die mit flanschartig ausgebildeten Ansätzen (9, 10) der Bauteile zusammenwirken, und bei dem wenigstens ein Spanngurt (1, 2) um senkrecht zur Zugrichtung des Spannbandes angeordnete Bolzen (3, 4) geführt ist, wobei zwei sich gegenüberliegende Bolzen (3, 4) über ein Spannelement (15, 16) lösbar miteinander verbunden sind und wobei jedes Spannelement (15, 16) aus zwei im Abstand voneinander an einer Trägerplatte (17) schwenkbar gehalterten Spannhebeln (18, 19) besteht, die die Bolzen tragen (3, 4), wobei die Vorrichtung Verriegelungselemente (26) einschließt, über die Spannhebel (18, 19) in ihrer Spannposition arretierbar sind, **dadurch gekennzeichnet, daß** die Vorrichtung zusätzlich dazu Verzögerungselemente (34, 35) einschließt, über die die Spannhebel (18, 19) auf ihrem Öffnungsweg beaufschlagbar sind.

2. Vorrichtung nach Anspruch 1, **dadurch gekennzeichnet, daß** jeder Spannhebel (18, 19) aus einem angenähert rechteckigen Rahmen (20) besteht, dessen eines Ende um eine von einem Schwenkbolzen (21) gebildete, parallel zu den Bolzen (3, 4) verlaufende Achse schwenkbar gehaltert ist, während der andere Endbereich des Rahmens (20) in einer Gewindebohrung eine Spannschraube (22) trägt, die sich in das Innere des Rahmens (20) erstreckt und dort mit einem Ansatz (23) versehen ist, der als Halterung für den Bolzen (3) ausgebildet ist, der durch Langlochbohrungen (24) des Rahmens (20) hindurch zu beiden Seiten aus dem Rahmen (20) hinausragt und in diesen Bereichen die beiden Spanngurte (1, 2) trägt.

3. Vorrichtung nach Anspruch 1 oder 2, **dadurch gekennzeichnet, daß** in Umfangsrichtung mehrere Spannelemente (15, 16) angeordnet sind.

4. Vorrichtung nach einem der Ansprüche 1 bis 3, **dadurch gekennzeichnet, daß** das Spannband aus zwei parallelen Spanngurten (1, 2) besteht.

5. Vorrichtung nach einem der Ansprüche 1 bis 4, **dadurch gekennzeichnet, daß** die Spannbänder (1, 2) und die Schwenkbolzen (21) auf dem gleichen Durchmesser des Systems liegen.

6. Vorrichtung nach einem der Ansprüche 1 bis 5, **dadurch gekennzeichnet, daß** die Spannbänder (1, 2) mit den Spannelementen (15, 16) im geöffneten Zustand eine geschlossene Einheit bilden.

## Claims

1. Device for releasably connecting rotationally symmetrical, cylindrical or conical components in the form of a clamping band which extends around the components to be connected in the clamping planes, disposed on the internal face of which are clamping elements (5) which co-operate with flange-type shoulders (9, 10) of the components, and at least one clamping brace (1, 2) is run around bolts (3, 4) disposed perpendicular to the tensioning direction of the clamping band, and two oppositely lying bolts (3, 4) are releasably connected to one another by means of a clamping element (15, 16) and each clamping element (15, 16) comprises two clamping levers (18, 19) supporting the bolts (3, 4) pivotably retained at a distance from one another on a support plate (17), and the device incorporates locking elements (26) by means of which clamping levers (18, 19) can be locked in their clamping position, **characterised in that** the device additionally incorporates delaying elements (34, 35) by means of which the clamping levers (18, 19) can be biased on their opening path.

2. Device as claimed in claim 1, **characterised in that** each clamping lever (18, 19) comprises an approximately rectangular frame (20), one end of which is retained so as to be pivotable about an axis formed by a pivot bolt (21) extending parallel with the bolts (3, 4), whilst the other end region of the frame (20) supports a clamping screw (22) extending into the interior of the frame (20) in a threaded bore, where it is provided with a shoulder (23) serving as a retaining means for the bolt (3), which projects out from the frame (20) at both ends through elongated mounting holes (24) of the frame (20) and supports the two clamping braces (1, 2) in these regions.

3. Device as claimed in claim 1 or 2, **characterised in that** several clamping elements (15, 16) are disposed in the circumferential direction.

4. Device as claimed in one of claims 1 to 3, **characterised in that** the clamping band comprises two parallel clamping braces (1, 2).

5. Device as claimed in one of claims 1 to 4, **characterised in that** the clamping braces (1, 2) and the pivot bolts (21) lie on the same diameter of the system.

6. Device as claimed in one of claims 1 to 5, **characterised in that** the clamping braces (1, 2) form a closed unit in conjunction with the clamping elements (15, 16) in the open state.

## Revendications

1. Dispositif pour l'accouplement détachable de composants cylindriques ou coniques à symétrie de révolution sous la forme d'un collier de serrage, comportant les composants à accoupler dans le plan de serrage, sur la surface intérieure duquel sont agencés des éléments d'ancrage (5), qui collaborent avec des rebords formant bride (9, 10) des composants, et dans lequel au moins un collier de serrage (1, 2) est guidé autour de chevilles (3, 4) disposées perpendiculairement au sens de traction du collier de serrage, dans lequel les deux chevilles (3, 4) se faisant face au-dessus d'un élément de serrage (15, 16) sont assemblées l'une avec l'autre de manière détachable, et dans lequel chaque élément de serrage (15, 16) est constitué de deux leviers de serrage (18, 19) supportant les chevilles (3, 4) et maintenus sur une plaque de support (17) à un intervalle l'un de l'autre, de manière à pouvoir être pivotés, le dispositif incluant des éléments de verrouillage (26), sur lesquels les leviers de serrage (18, 19) peuvent être bloqués dans leur position de serrage, **caractérisé en ce que** le dispositif comporte pour cela de manière supplémentaire des éléments de temporisation (34, 35), qui accueillent les leviers de serrage (18, 19) au cours de leur trajet d'ouverture.

2. Dispositif selon la revendication 1, **caractérisé en ce que** chaque levier de serrage (18, 19) est constitué d'un cadre (20) approximativement rectangulaire, dont une extrémité est maintenue de manière à pouvoir être pivotée autour d'un axe passant parallèlement aux chevilles (3, 4) et formé d'un axe de pivotement (21), tandis que l'autre secteur d'extrémité du cadre (20) supporte, dans un trou fileté, une vis de serrage (22), qui s'étend à l'intérieur du cadre (20), et qui y est muni d'un appendice (23) formé en tant que fixation pour la cheville (3), et qui fait saillie à travers les alésages en forme de trou allongés (24) du cadre (20), à travers les deux côtés du cadre (20) et supporte dans ces secteurs les deux rubans de serrage (1, 2).

3. Dispositif selon la revendication 1 ou 2, **caractérisé en ce que** plusieurs éléments de serrage (15, 16) sont disposés dans le sens circonférentiel.

4. Dispositif selon l'une quelconque des revendications 1 à 3, **caractérisé en ce que** le collier de serrage est constitué de deux rubans de serrage (1, 2) parallèles.

5. Dispositif selon l'une quelconque des revendications 1 à 4, **caractérisé en ce que** les colliers de serrages (1, 2) et les axes de pivotement (21) sont du même diamètre que le système.

6. Dispositif selon l'une quelconque des revendications 1 à 5, **caractérisé en ce que** les colliers de serrages (1, 2) forment un ensemble fermé avec les éléments de serrage (15, 16) en position ouverte.
